# EUROPÄISCHE PATENTANMELDUNG

(11) **EP 3 047 778 A1**
(43) Veröffentlichungstag der Anmeldung: **27.07.2016**
(21) Anmeldenummer: 16151571.3
(22) Anmeldetag: 15.01.2016
(51) Int. Cl.: A47L 9/14

(54) **ELEKTRISCH BETRIEBENER STAUBSAUGER**

(30) Priorität: 21.01.2015 DE 102015100818
(71) Anmelder: Vorwerk & Co. Interholding GmbH, 42275 Wuppertal (DE)
(72) Erfinder: Sernecki, Miron, 58097 Hagen (DE); Starflinger, Frank, 44793 Bochum (DE)
(74) Vertreter: Müller, Enno

(57) **Zusammenfassung**

Die Erfindung betrifft einen elektrisch betriebenen Staubsauger (1) mit einem Gebläse (2) zum Fördern von sauggutbeladener Luft und mit einer auf der Saugseite des Gebläses (2) angeordneten Filterkammer (3) zur Aufnahme eines ein Filtermaterial (4) aufweisenden Filterelementes (5), insbesondere einer Filtertüte, wobei das Filtermaterial (4) bei einem Betrieb des Gebläses (2) zumindest teilweise zu der Innenwandung (6) der Filterkammer (3) gesaugt wird. Um die filterwirksame Oberfläche des Filterelementes (5) ohne erheblichen Herstellungsaufwand und hohe Herstellungskosten zu erhöhen, wird vorgeschlagen, dass die Innenwandung (6) der Filterkammer (3) mindestens ein in den Innenraum (7) der Filterkammer (3) hineinragendes Formelement (8) aufweist, wobei die Größe des in die Filterkammer (3) hineinragenden Volumens des Formelementes (8) bzw. der Summe der Formelemente (8) mindestens 10 Prozent, bevorzugt mindestens 25 Prozent bis hin zu 100 Prozent der Größe des außerhalb der Formelemente (8) verbleibenden Volumens der Filterkammer (3) aufweist. Des Weiteren betrifft die Erfindung ein System aus einem elektrisch betriebenen Staubsauger (1) und einem Filterelement (5).

## Beschreibung

Die Erfindung betrifft einen elektrisch betriebenen Staubsauger mit einem Gebläse zum Fördern von sauggutbeladener Luft und mit einer auf der Saugseite des Gebläses angeordneten Filterkammer zur Aufnahme eines ein Filtermaterial aufweisenden Filterelementes, insbesondere einer Filtertüte, wobei das Filtermaterial bei einem Betrieb des Gebläses zumindest teilweise zu der Innenwandung der Filterkammer gesaugt wird.

Elektrisch betriebene Staubsauger dieser Art sind im Stand der Technik hinreichend bekannt. Diese können als Bodenstaubsauger oder auch handgeführte Akkustaubsauger ausgebildet sein. Das Gebläse saugt das von einem Untergrund entfernte Sauggut in das in der Filterkammer angeordnete Filterelement. Anschließend tritt die angesaugte Luft durch das Filtermaterial des Filterelementes hindurch, um zu dem Gebläse zu gelangen, wobei das in der Luft enthaltene Sauggut von dem Filtermaterial zurückgehalten wird, so dass ausschließlich gereinigte Luft zu dem Gebläse gelangt. Das Filterelement besteht zumeist aus einem flexiblen Material, welches durch den Betrieb des Gebläses in Richtung des Gebläses gesaugt wird und sich somit innerhalb der Filterkammer ausbreitet. Dabei wird das Filtermaterial gestreckt, so dass für den Filtervorgang eine möglichst große filterwirksame Oberfläche zur Verfügung steht.

Um die Größe der filterwirksamen Oberfläche bei konstantem Volumen der zur Verfügung stehenden Filterkammer darüber hinaus weiter zu erhöhen, sind im Stand der Technik unterschiedliche Maßnahmen bekannt, die das Filtermaterial modifizieren. Die Druckschrift EP 867 216 A1 betrifft beispielsweise ein Filterelement, dessen Filtermaterial zickzackförmig gefaltet ist und Flächenversteifungselemente aufweist. Die Druckschrift EP 1134 013 A1 betrifft daneben ein plissiertes Filterelement aus einem mehrlagigen Filtermaterial, wobei die aufeinanderfolgenden Lagen verschmolzene Polymerbereiche enthalten, durch die das Material verfestigt wird und somit keine Abstandshalter zur Beabstandung der einzelnen Falten der Plissierung notwendig sind.

Obwohl die vorgenannten Maßnahmen die Größe der filterwirksamen Oberfläche durchaus erhöhen, sind diese mit einem erheblichen Herstellungsaufwand und damit hohen Herstellungskosten verbunden.

Es ist daher Aufgabe der Erfindung, eine Alternative anzugeben, bei welcher die filterwirksame Oberfläche des Filterelementes ohne die vorgenannten Nachteile erhöht wird.

Zur Lösung schlägt die Erfindung einen elektrisch betriebenen Staubsauger vor, bei welchem die Innenwandung der Filterkammer mindestens ein in den Innenraum der Filterkammer hineinragendes Formelement aufweist, wobei die Größe des in die Filterkammer hineinragenden Volumens des Formelementes beziehungsweise der Summe der Formelemente mindestens 10 Prozent, bevorzugt mindestens 25 Prozent bis hin zu 100 Prozent der Größe des außerhalb der Formelemente verbleibenden Volumens der Filterkammer aufweist.

Gemäß der Erfindung erfolgt die Verbesserung durch eine Modifikation der Filterkammer des Staubsaugers, in welche das Filterelement eingesetzt wird. Konkret wird die Innenwandung der Filterkammer so modifiziert, dass diese nun eine oberflächenvergrößernde Struktur zur Anlage zumindest eines Teilbereiches des Filtermaterials aufweist. Die Anlage des Filtermaterials an dieser Struktur führt dazu, dass die Struktur auf das Filtermaterial übertragen wird, so dass sich die filterwirksame Oberfläche des Filterelementes ohne eine Vergrößerung der Filterkammer und somit auch ohne eine ungewünschte Vergrößerung des Staubsaugers vergrößern lässt. Um die Erfindung optimal nutzen zu können, empfiehlt es sich, ein größeres Filterelement, d.h. ein Filterelement mit einer größeren Oberfläche des Filtermaterials, in die Filterkammer einzusetzen. Die Innenwandung der Filterkammer wird erfindungsgemäß durch Formelemente modifiziert, welche in den Innenraum der Filterkammer hineinragen. Es ist möglich, entweder nur ein einzelnes Formelement vorzusehen, oder alternativ eine Mehrzahl von Formelementen gleichzeitig. Das Formelement beziehungsweise die Formelemente können einteilig mit der Innenwandung der Filterkammer ausgebildet sein oder beispielsweise durch Kleben, Schweißen oder ähnliche Verbindungsverfahren verbunden sein.

Um den durch den Einsatz eines Filterelementes stets verursachten Druckverlust auszugleichen und den resultierenden Luftstrom durch das Filtermaterial zu vergrößern, empfiehlt es sich, dass die Größe des in die Filterkammer hineinragenden Volumens des Formelementes beziehungsweise der Summe der Formelemente - falls mehrere Formelemente in der Filterkammer angeordnet sind - mindestens 10 Prozent, bevorzugt mindestens 25 Prozent bis hin zu 100 Prozent der Größe des außerhalb der Formelemente verbleibenden Volumens der Filterkammer aufweist. Je nach dem in der Praxis benötigten Volumen zur Sammlung des Sauggutes innerhalb des Staubsaugers kann das Volumen des Formelementes beziehungsweise der Formelemente 10 Prozent bis 100 Prozent des für das Sauggut zur Verfügung stehenden Volumens der Filterkammer einnehmen, so dass gleichzeitig noch ein geeignet großes Volumen für das Sauggut zur Verfügung steht und der Nutzer das Filterelement nicht häufiger als tolerierbar wechseln muss. Bei üblichen Haushaltsstaubsaugern hat es sich als adäquat herausgestellt, die Größe des in die Filterkammer hineinragenden Volumens des Formelementes maximal genauso groß zu bemessen wie das verbleibende Volumen der Filterkammer, welches zur Sammlung des Sauggutes zur Verfügung steht. Daneben hat sich in der Praxis ebenfalls eine Mindestgröße für das in die Filterkammer hineinragende Volumen des Formelementes herausgestellt, bei deren Unterschreitung keine wesentliche Vergrößerung der filterwirksamen Oberfläche zu verzeichnen ist, so dass der Herstellungsaufwand für die Filterkammer des Staubsauger nicht in einem vorteilhaften Verhältnis zu dem damit erreichten Effekt steht.

Des Weiteren wird vorgeschlagen, dass die Größe der durch das Formelement beziehungsweise die Formelemente gebildeten Innenwandungsbereiche der Filterkammer mindestens 10 Prozent, bevorzugt mindestens 25 Prozent, bis hin zu 100 Prozent der Größe der gesamten Innenwandung der Filterkammer beträgt. Das Formelement beziehungsweise die Formelemente können somit entweder nur zu einem gewissen Anteil die Innenwandung der Filterkammer bilden oder alternativ auch vollständig. Insbesondere können die Formelemente eine regelmäßige Struktur der Innenwandung bilden, beispielsweise regelmäßig wiederkehrende Elemente, wie Rippen, Stege, Nocken, Pyramiden oder ähnliches, aufweisen.

Es wird vorgeschlagen, dass das Formelement ein von einer der Saugseite des Gebläses zugeordneten Seite der Filterkammer in den Innenraum der Filterkammer hineinragender, eine Hohlstruktur aufweisender Dorn ist. Gemäß dieser Ausgestaltung legt sich das Filtermaterial bei einem Betrieb des Gebläses um die Außenseite des Dorns, so dass die angesaugte Luft durch das Filtermaterial in den Hohlraum des Dorns einströmen kann und dann wie in einem Strömungskanal zu dem Gebläse geleitet wird. Der Dorn weist dazu auf seiner Dornwandung Dornöffnungen auf, durch welche die gefilterte Luft in den Hohlraum des Dorns eindringen kann. Vorteilhaft weist der Dorn ebenso an seiner Stirnfläche eine oder mehrere Dornöffnungen auf, durch welche ebenfalls gefilterte Luft in den Hohlraum des Dorns strömen kann.

Des Weiteren kann der Dorn beispielsweise einen sternförmigen Querschnitt aufweisen, so dass die Umfangsfläche des Dorns eine größere Oberfläche bereitstellt als ein Dorn, welcher im Querschnitt kreisförmig ausgebildet ist (gleicher Außendurchmesser vorausgesetzt).

Vorteilhaft kann der Dorn an einem ersten Gehäuseteilbereich des Staubsaugers angeordnet sein, während die Filterkammer im Übrigen in einem damit verbindbaren zweiten Gehäuseteilbereich ausgebildet ist. Beispielsweise wird das Filterelement in den zweiten Gehäuseteilbereich eingesetzt, wobei anschließend der erste Gehäuseteilbereich mit dem zweiten Gehäuseteilbereich verbunden wird und dadurch der Dorn im zusammengebauten Zustand des Staubsaugers in den Bauraum des zweiten Gehäuseteilbereiches und damit auch in die Filterkammer hineinragt.

Des Weiteren kann alternativ oder zusätzlich zu einem Dorn ein stegförmiges Formelement ausgebildet sein, wobei insbesondere mehrere stegförmige Formelemente im Wesentlichen parallel zueinander und/oder im Wesentlichen in Saugrichtung des Gebläses angeordnet sind. Gemäß einer Ausführungsvariante kann die Innenwandung der Filterkammer stegförmige Formelemente nach der Art paralleler Rippen aufweisen, wobei es sich zum Zwecke der Bereitstellung eines Strömungsweges zu dem Gebläse empfiehlt, dass die Stege in Saugrichtung des Gebläses angeordnet sind. Insbesondere empfiehlt sich dies, falls der Staubsauger eine lineare Hintereinanderanordnung von Filterkammer und Gebläse aufweist. Dabei können die Formelemente gleichzeitig auch als Abstandshalter dienen, welche das Filtermaterial des Filterelementes an einer vollständigen Anlage an der Innenwandung der Filterkammer hindern. Insbesondere kann es vorgesehen sein, dass nur ein bestimmter Teilbereich eines Formelementes in Kontakt mit dem Filtermaterial treten kann, während ein ausgehend von der Mitte des Innenraumes der Filterkammer weiter außen gelegener Teilbereich des Formelementes nicht mit dem Filtermaterial in Kontakt tritt. Diese hängt insbesondere davon ab, wie weit ein Formelement in den Innenraum der Filterkammer hineinragt und wie groß das Volumen des Filterelementes relativ zu dem Volumen der Filterkammer bemessen ist.

Neben dem zuvor erläuterten Staubsauger wird mit der Erfindung auch ein System aus einem elektrisch betriebenen Staubsauger, insbesondere einem zuvor erläuterten Staubsauger, mit einem Gebläse zum Fördern von sauggutbeladener Luft und mit einer auf der Saugseite des Gebläses angeordneten Filterkammer, und aus einem Filterelement, insbesondere einer Filtertüte, zur Anordnung in der Filterkammer des Staubsaugers, vorgeschlagen, wobei das Filterelement eine ortsfest in der Filterkammer befestigbare Bodenplatte und ein Filtermaterial aufweist, welches bei Betrieb des Gebläses zumindest teilweise an die Innenwandung der Filterkammer gesaugt wird, wobei die Innenwandung der Filterkammer mindestens ein in den Innenraum der Filterkammer hineinragendes Formelement aufweist, wobei die Größe der durch das Formelement beziehungsweise die Formelemente gebildeten Innenwandungsbereiche der Filterkammer mindestens 10 Prozent, bevorzugt mindestens 25 Prozent, bis hin zu 100 Prozent der Größe der gesamten Innenwandung der Filterkammer beträgt.

Die sich dadurch ergebenden Vorteile sind identisch mit den in Bezug auf den Staubsauger zuvor erläuterten Vorteilen.

Des Weiteren wird vorgeschlagen, dass die Größe der filterwirksamen Oberfläche des Filtermaterials im Wesentlichen, insbesondere 90 Prozent bis 100 Prozent, der Größe der gesamten Innenwandung der Filterkammer einschließlich der Größe der durch das Formelement beziehungsweise die Formelemente gebildeten Innenwandungsbereiche und abzüglich der Größe der in die Filterkammer weisenden Oberfläche der Bodenplatte des Filterelementes beträgt. Damit wird ein System aus einem Staubsauger und einem Filterelement geschaffen, bei welchem die Größe der filterwirksamen Oberfläche des Filtermaterials des Filterelementes optimal auf die Größe der Innenwandung der Filterkammer abgestimmt ist. Die Oberfläche des Filtermaterials ist gerade so groß, dass die Oberfläche der Innenwandung der Filterkammer bei maximaler Expansion des Filterelementes (bei eingeschaltetem Gebläse) die Innenwandung nahezu vollständig bedeckt. Dabei wird insbesondere vorgeschlagen, dass die Größe der filterwirksamen Oberfläche 90 bis 100 Prozent der Größe der Innenwandung (ohne die von der Bodenplatte des Filterelementes bedeckte Fläche) beträgt. Sofern die filterwirksame Oberfläche geringförmig kleiner ist, existieren Bereiche an der Innenwandung der Filterkammer, welche nicht in Kontakt mit dem Filtermaterial stehen, so dass gefilterte Luft leichter durch das Filtermaterial strömen kann.

Es wird vorgeschlagen, dass das Filterelement zumindest teilweise von der Innenwandung der Filterkammer beabstandet ist, um einen Strömungsweg für die von dem Filtermaterial gefilterte Luft zu dem Gebläse bereitzustellen. Diese Beabstandung erfolgt vorteilhaft durch die Wahl der Größe der filterwirksamen Oberfläche des Filtermaterials im Verhältnis zu der Größe der gesamten Innenwandung der Filterkammer abzüglich der durch die Bodenplatte abgedeckten Fläche. Das Formelement übernimmt somit zum einen die Funktion, das Filtermaterial so zu formen, dass eine besonders große filterwirksame Oberfläche zur Verfügung steht, und zum anderen die Funktion, das Filtermaterial von einem Teilbereich der Innenwandung der Filterkammer zu beabstanden, damit die durch das Filtermaterial hindurchtretende Luft an der nach außen weisenden Seite des Filterelementes entlangströmen kann, um zu dem Gebläse zu gelangen.

Es empfiehlt sich, dass das Filtermaterial ein im Wesentlichen biegeschlaffes Material, insbesondere ein Vlies und/ oder ein Gewebe, aufweist. Ein solches Material kann bei einem Betrieb des Gebläses leicht an die Innenwandung der Filterkammer gesaugt werden, so dass das Filterelement besonders schnell die gewünschte Form annehmen kann und sich möglichst getreu an die von den Formelementen gebildete Struktur der Innenwandung anlegen kann.

Im Folgenden wird die Erfindung anhand von Ausführungsbeispielen näher erläutert. Es zeigen:
- Fig. 1: einen erfindungsgemäßen Staubsauger in einer perspektivischen Draufsicht,
- Fig. 2: einen Teilbereich des Staubsaugers in geschnittener Ansicht,
- Fig. 3: eine Filterkammer eines Staubsaugers gemäß einer ersten Ausführungsform,
- Fig. 4: eine Filterkammer gemäß einer zweiten Ausführungsform,
- Fig. 5: eine Filterkammer gemäß einer dritten Ausführungsform,
- Fig. 6: eine Filterkammer gemäß einer vierten Ausführungsform.

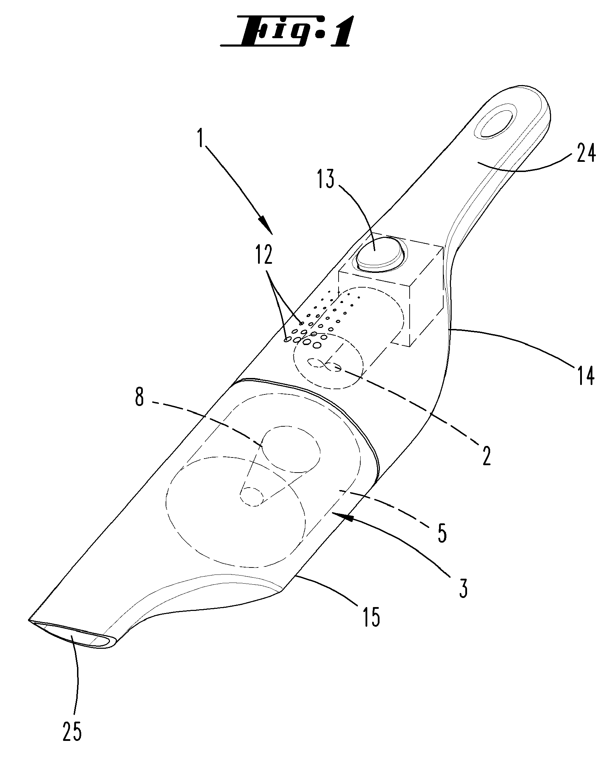

Figur 1 zeigt einen erfindungsgemäßen Staubsauger 1, welcher exemplarisch als handgeführter Akkustaubsauger ausgebildet ist. Das Gehäuse des Staubsaugers 1 besteht aus einem oberen Gehäuseteil 14 und einem unteren Gehäuseteil 15. An dem oberen Gehäuseteil 14 ist ein Griffteil 24 ausgebildet, an welchem ein Nutzer den Staubsauger 1 bei Reinigungsvorgängen führen kann. In dem oberen Gehäuseteil 14 ist ein Gebläse 2 angeordnet, welches mittels eines Schalters 13 ein- und ausgeschaltet werden kann. Mit Hilfe des Gebläses 2 kann Sauggut von einem zu reinigenden Untergrund aufgesaugt werden, wobei die das Gebläse 2 verlassende Luft durch Ausblasöffnungen 12 in die Umgebung entweichen kann. Mit dem oberen Gehäuseteil 14 ist der untere Gehäuseteil 15 verbunden, beispielsweise durch eine Rastverbindung oder Steckverbindung. Das obere Gehäuseteil 14 und das untere Gehäuseteil 15 können dabei vorteilhaft auch durch ein Scharnier miteinander verbunden sein, so dass die beiden Gehäuseteile 14,15 zueinander verschwenkbar sind. Der untere Gehäuseteil 15 weist eine Saugöffnung 25 auf, durch welche sauggutbeladene Luft bei Betrieb des Gebläses 2 in den unteren Gehäuseteil 15 eingesaugt werden kann. In dem unteren Gehäuseteil 15 befindet sich eine Filterkammer 3, in welcher ein Filterelement 5 mit einem Filtermaterial 4 eingesetzt ist. Die von dem Gebläse 2 durch die Saugöffnung 25 in den Staubsauger 1 eingesaugte Luft strömt zuerst durch das in der Filterkammer 3 angeordnete Filterelement 5 und anschließend als gefilterte Luft zu dem Gebläse 2 und wird schließlich durch die Ausblasöffnungen 12 wieder an die Umgebung abgegeben.

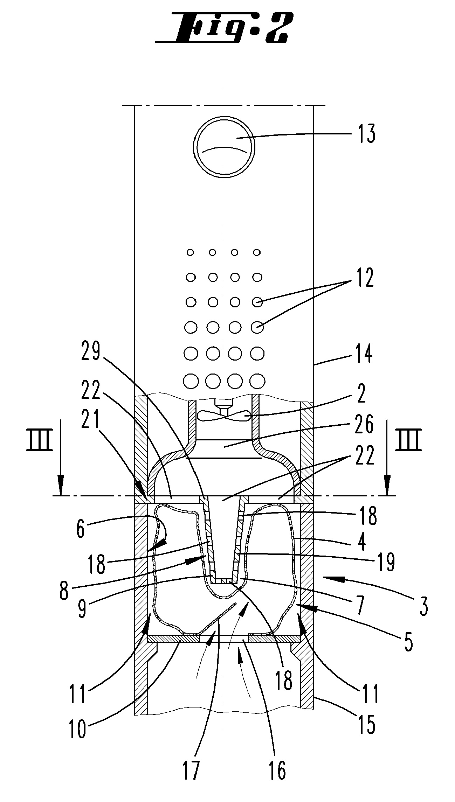

Figur 2 zeigt Teilbereiche des oberen Gehäuseteils 14 und des unteren Gehäuseteils 15 in einer geschnittenen Ansicht. Der untere Gehäuseteil 15 weist die Filterkammer 3 auf, in welcher das Filterelement 5 angeordnet ist. Das Filterelement 5 besteht aus einer Bodenplatte 10 und dem daran angeordneten Filtermaterial 5. Die Bodenplatte 10 ist aus Kunststoff und/oder Karton hergestellt. Das daran angeordnete Filtermaterial 4 ist beispielsweise ein Mikrofaservlies, ein Textilgewebe oder ähnliches. Die Bodenplatte 10 ist innerhalb der Filterkammer 3 fixiert, so dass diese ortsfest mit der Innenwandung 6 der Filterkammer 3 verbunden ist.

Die Bodenplatte 10 weist eine Filteröffnung 16 mit einer Klappe 17 auf, durch welche angesaugte Luft in das Filterelement 5 gelangen kann. Der Strömungswiderstand des Filtermaterials 4 bewirkt ein Aufblasen des Filterelementes 5, so dass sich das Filtermaterial 4 in Richtung der Innenwandung 6 der Filterkammer 3 ausdehnt, wobei zumindest teilweise ein Strömungsweg 11 zwischen dem Filtermaterial 4 und der Innenwandung 6 verbleibt, damit die gefilterte Luft das Filterelement 5 wieder verlassen kann.

Der obere Gehäuseteil 14 des Staubsaugers 1 weist einen Saugkanal 26 auf, in welchem das Gebläse 2 angeordnet ist. Der Saugkanal 26 führt von einem Gehäuseteil-Endbereich 21, welcher im zusammengebauten Zustand des Staubsaugers 1 in Kontakt mit dem unteren Gehäuseteil 15 steht, zu den Ausblasöffnungen 12. Der Gehäuseteil-Endbereich 21 des oberen Gehäuseteils 14 weist eine oder mehrere Ansaugöffnungen 22 auf, durch welche Luft aus der Filterkammer 3 des unteren Gehäuseteils 15 in den Saugkanal 26 des oberen Gehäuseteils 14 strömen kann. Der Gehäuseteil-Endbereich 21 weist zudem ein Formelement 8, hier als Dorn 9 ausgebildet, auf. Der Dorn 9 weist eine im Wesentlichen zylindrische Form auf, welche innen hohl ausgebildet ist und somit eine Verlängerung des Saugkanals 26 bildet. Der Mantel des Dorns, nämlich die Dornwandung 19, ist durch Dornöffnungen 18 teilweise luftdurchlässig ausgebildet, so dass Luft in den Dorn 9 hineinströmen und zu dem Gebläse 2 gelangen kann.

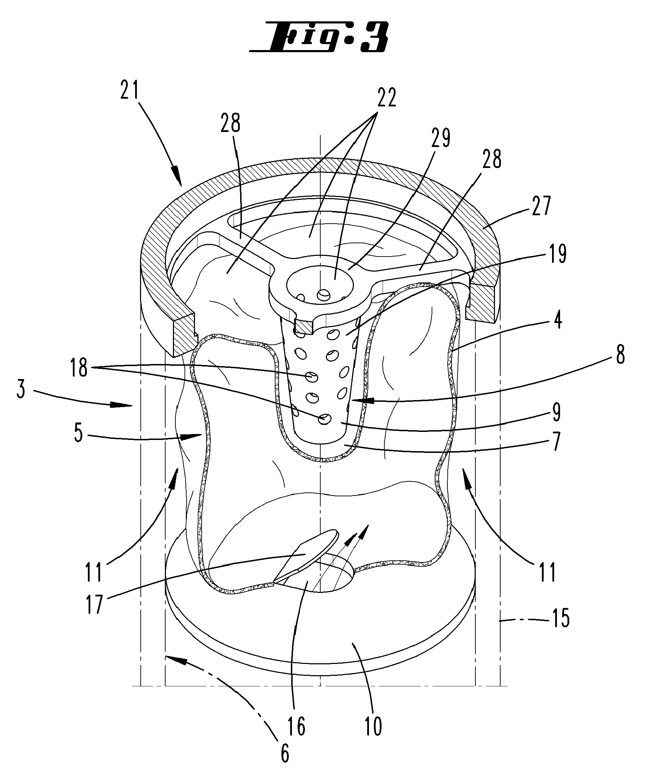

Figur 3 zeigt einen vergrößerten Ausschnitt der Filterkammer 3 in Verbindung mit dem Gehäuseteil-Endbereich 21 des oberen Gehäuseteils 14. Zu sehen ist eine Ausführungsform des Gehäuseteil-Endbereiches 21, welche im Wesentlichen einen äußeren Ring 27 aufweist, von welchem ausgehend Speichen 28 zu einem zentralen Ring 29 führen, der den Dorn 9 trägt. Zwischen benachbarten Speichen 28 sind die Ansaugöffnungen 22 ausgebildet. Der Dorn 9 weist eine Dornwandung 19 mit einer Vielzahl von Dornöffnungen 18 auf, welche sowohl über die Mantelfläche des zylinderförmigen Dorns 9 verteilt sind, als auch über die in die Filterkammer 3 weisende Stirnfläche. Ebenso kann die Stirnfläche auch durch eine einzige große Dornöffnung 18 gebildet sein. Das Filtermaterial 4 des Filterelementes 5 ist an die Innenwandung 6 der Filterkammer 3 inklusive der Dornwandung 19 herangeführt, wobei zwischen dem Filtermaterial 4 und der Innenwandung 6 der Filterkammer 3 ein Strömungsweg 11 verbleibt, so dass die durch das Filtermaterial 4 hindurchtretende Luft zu dem Gebläse 2 strömen kann.

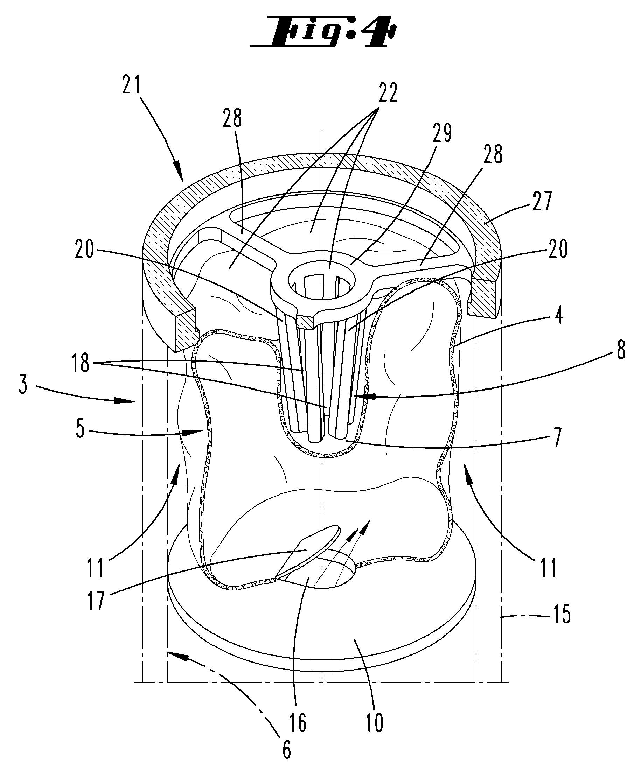

Figur 4 zeigt eine alternative Ausführungsform eines in die Filterkammer 3 ragenden Formelementes 8, wobei das Formelement 8 ebenfalls im Wesentlichen wieder als Dorn 9 ausgebildet ist. Der Dorn 9 besteht hier aus mehreren Dornstegen 20, welche ausgehend von dem zentralen Ring 29 des Gehäuseteil-Endbereiches 21 in die Filterkammer 3 des unteren Gehäuseteils 15 hineinragen. Zwischen benachbarten Dornstegen 20 sind Dornöffnungen 18 gegeben, durch welche aus dem Filterelement 5 austretende Luft in die Hohlstruktur des Dorns 9 eintreten kann.

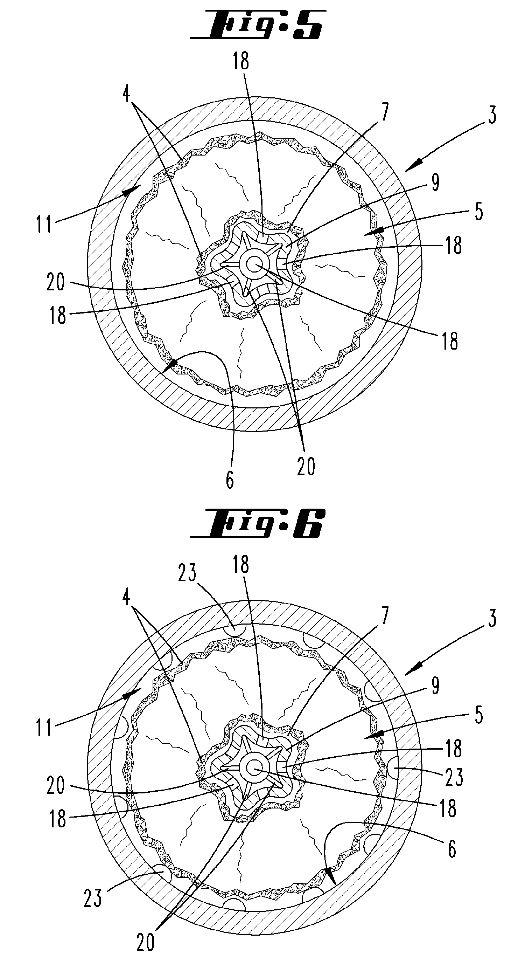

Die Figuren 5 und 6 zeigen Querschnittsansichten weiterer Ausführungsformen der Erfindung, bei welchen das Formelement 8 als zylindrischer Dorn 9 mit einem sternförmigen Querschnitt ausgebildet ist. Die Figuren zeigen das in den Innenraum 7 der Filterkammer 3 eingesetzte Filterelement 5, dessen Filtermaterial 4 unter Bereitstellung eines Strömungsweges 11 an die Innenwandung 6 der Filterkammer 3 angenähert ist. Dabei liegt das Filtermaterial 4 an der Dornwandung 19 des Dorns 9 an. Zum Strömen von Luft aus dem Filterelement 5 in den Dorn 9 sind in der Dornwandung 19 Dornöffnungen 18 ausgebildet. Darüber hinaus bildet die Stirnseite des Dorns 9 eine weitere Dornöffnung 18. Durch den sternförmigen Querschnitt der Dornwandung 19 weist diese eine größere Fläche auf als ein entsprechender Dorn mit einem kreisförmigen Querschnitt.

Gemäß Figur 6 weist die Filterkammer 3 ergänzend zu dem Dorn 9 mehrere Wandstege 23 auf, welche ebenfalls Formelemente 8 im Sinne der Erfindung sind. Die Wandstege 23 sind parallel zu der Längserstreckung der Filterkammer 3 an der Innenwandung 6 ausgebildet. Dabei dienen die Wandstege 23 sowohl als Abstandhalter für das Filtermaterial 4 gegenüber Teilbereichen der Innenwandung 6 als auch als Formelemente 8 zur Formung des Filtermaterials 4.

Die Erfindung funktioniert nun so, dass ein Nutzer des Staubsaugers 1 zum Einsetzen eines Filterelementes 5 in die Filterkammer 3 den oberen Gehäuseteil 14 von dem unteren Gehäuseteil 15 trennt, beispielsweise einen der Gehäuseteile 14,15 von dem anderen Gehäuseteil 14,15 wegschwenkt. Die in dem unteren Gehäuseteil 15 ausgebildete Filterkammer 3 steht nun zur Aufnahme eines Filterelementes 5 offen. Der Nutzer verrastet die Bodenplatte 10 des Filterelementes 5 in der Filterkammer 3, so dass diese ortsfest in dem unteren Gehäuseteil 15 angeordnet ist. Sodann verbindet er den unteren Gehäuseteil 15 mit dem oberen Gehäuseteil 14, so dass der Staubsauger 1 für einen Saugvorgang zur Verfügung steht.

Bei Inbetriebnahme des Gebläses 2 wird sauggutbeladene Luft in die Saugöffnung 25 des unteren Gehäuseteils 15 eingesaugt und gelangt durch die in der Bodenplatte 10 angeordnete Filteröffnung 16 in das Filterelement 5. Dazu öffnet sich durch den von dem Gebläse 2 erzeugten Unterdruck die Klappe 17 der Bodenplatte 10. Das Filtermaterial 4 des Filterelementes 5 erzeugt einen Widerstand für die in das Filterelement 5 strömende Luft, so dass das Filtermaterial 4 aufgeblasen wird und sich innerhalb der Filterkammer 3 ausbreitet. Dabei tritt das Filtermaterial 4 in Kontakt mit den in der Filterkammer 3 ausgebildeten Formelementen 8, nämlich dem Dorn 9 und gegebenenfalls den Wandstegen 23.

Die Größe der Oberfläche des Filtermaterials 4 ist auf die Größe der durch die Innenwandung 6 insgesamt zur Verfügung gestellten Anlageflächen abgestimmt. Konkret ist die Größe des Filtermaterials 4 bei den gezeigten Ausführungsvarianten so bemessen, dass das Filtermaterial 4 vollständig an dem Dorn 9 anliegt und sich den übrigen Bereichen der Innenwandung 6 der Filterkammer 3 unter Ausbildung eines Strömungsweges 11 annähert. Für den Strömungsweg 11 kann zwischen dem Filtermaterial 4 und der Innenwandung 6 ein Abstand von wenigen Millimetern, beispielsweise kleiner als 5 mm, belassen werden. Zur gleichmäßigen Beabstandung des Filtermaterials 4 von der Innenwandung 6, d.h. um zumindest teilweise einen Strömungsweg 11 sicherzustellen, können die als Wandstege 23 ausgebildeten Formelemente 8 der Filterkammer 3 gleichzeitig als Abstandshalter dienen, wobei sich das Filtermaterial 4 nur um einen in den Innenraum 7 der Filterkammer 3 ragenden Endbereich der Wandstege 23 legt und im Fußbereich der Wandstege 23 unter Ausbildung eines Strömungsweges 11 von der Innenwandung 6 beabstandet ist.

Damit ein für den Betrieb des Staubsaugers 1 günstiges Verhältnis zwischen der Größe der filterwirksamen Oberfläche des Filtermaterials 4 und dem neben den Formelementen 8 verbleibenden Volumen für das in das Filterelement 5 eingesaugte Sauggut zur Verfügung steht, beträgt die Größe der in die Filterkammer 3 hineinragenden Formelemente 8 hier ca. 10 bis 20 Prozent des übrigen Volumens der Filterkammer 3. Dadurch steht ein überwiegender Teilbereich der Filterkammer 3 zur Sammlung von Sauggut zur Verfügung, während gleichzeitig die filterwirksame Oberfläche des Filtermaterials 4 durch die Anlage an den Formelementen 8 erhöht ist. Es sind des Weiteren eine Vielzahl anderer Konstellationen denkbar, bei welchen die Formelemente 8 einen größeren Teilbereich der Filterkammer 3 einnehmen. Dabei reduziert sich das für das Sauggut zur Verfügung stehende Volumen innerhalb der Filterkammer 3, während gleichzeitig die Größe der filterwirksamen Oberfläche des Filtermaterials 4 erhöht wird. Je nach den gewünschten Eigenschaften des Staubsaugers 1 kann die eine oder andere Eigenschaft den größeren Vorzug bekommen.

**Bezugszeichenliste:**

| | | | |
|---|---|---|---|
| 1 | Staubsauger | 25 | Saugöffnung |
| 2 | Gebläse | 26 | Saugkanal |
| 3 | Filterkammer | 27 | Ring |
| 4 | Filtermaterial | 28 | Speiche |
| 5 | Filterelement | 29 | Ring |
| 6 | Innenwandung | | |
| 7 | Innenraum | | |
| 8 | Formelement | | |
| 9 | Dorn | | |
| 10 | Bodenplatte | | |
| 11 | Strömungsweg | | |
| 12 | Ausblasöffnung | | |
| 13 | Schalter | | |
| 14 | oberer Gehäuseteil | | |
| 15 | unterer Gehäuseteil | | |
| 16 | Filteröffnung | | |
| 17 | Klappe | | |
| 18 | Dornöffnung | | |
| 19 | Dornwandung | | |
| 20 | Dornsteg | | |
| 21 | Gehäuseteil-Endbereich | | |
| 22 | Ansaugöffnung | | |
| 23 | Wandsteg | | |
| 24 | Griffteil | | |

## Patentansprüche

1. Elektrisch betriebener Staubsauger (1) mit einem Gebläse (2) zum Fördern von sauggutbeladener Luft und mit einer auf der Saugseite des Gebläses (2) angeordneten Filterkammer (3) zur Aufnahme eines ein Filtermaterial (4) aufweisenden Filterelementes (5), insbesondere einer Filtertüte, wobei das Filtermaterial (4) bei einem Betrieb des Gebläses (2) zumindest teilweise zu der Innenwandung (6) der Filterkammer (3) gesaugt wird, **dadurch gekennzeichnet, dass** die Innenwandung (6) der Filterkammer (3) mindestens ein in den Innenraum (7) der Filterkammer (3) hineinragendes Formelement (8) aufweist, wobei die Größe des in die Filterkammer (3) hineinragenden Volumens des Formelementes (8) bzw. der Summe der Formelemente (8) mindestens 10 Prozent, bevorzugt mindestens 25 Prozent bis hin zu 100 Prozent der Größe des außerhalb der Formelemente (8) verbleibenden Volumens der Filterkammer (3) aufweist.

2. Staubsauger (1) nach Anspruch 1, **dadurch gekennzeichnet, dass** die Größe der durch das Formelement (8) bzw. die Formelemente (8) gebildeten Innenwandungsbereiche der Filterkammer (3) mindestens 10 Prozent, bevorzugt mindestens 25 Prozent, bis hin zu 100 Prozent der Größe der gesamten Innenwandung (6) der Filterkammer (3) beträgt.

3. Staubsauger (1) nach Anspruch 1 oder 2, **dadurch gekennzeichnet, dass** das Formelement (8) ein von einer der Saugseite des Gebläses (2) zugeordneten Seite der Filterkammer (3) in den Innenraum (7) der Filterkammer (3) hineinragender, eine Hohlstruktur aufweisender Dorn (9) ist.

4. Staubsauger (1) nach Anspruch 3, **dadurch gekennzeichnet, dass** der Dorn (9) einen sternförmigen Querschnitt aufweist.

5. Staubsauger (1) nach einem der vorhergehenden Ansprüche, **dadurch gekennzeichnet, dass** das Formelement (8) stegförmig ausgebildet ist, wobei insbesondere mehrere stegförmige Formelemente (8) im Wesentlichen parallel zueinander und/oder im Wesentlichen in Saugrichtung des Gebläses (2) angeordnet sind.

6. System aus einem elektrisch betriebenen Staubsauger (1), insbesondere einem Staubsauger (1) nach einem der Ansprüche 1 bis 5, mit einem Gebläse (2) zum Fördern von sauggutbeladener Luft und mit einer auf der Saugseite des Gebläses (2) angeordneten Filterkammer (3), und aus einem Filterelement (5), insbesondere einer Filtertüte, zur Anordnung in der Filterkammer (3) des Staubsaugers (1), wobei das Filterelement (5) eine ortsfest in der Filterkammer (3) befestigbare Bodenplatte (10) und ein Filtermaterial (4) aufweist, welches bei Betrieb des Gebläses (2) zumindest teilweise an die Innenwandung (6) der Filterkammer (3) gesaugt wird, **dadurch gekennzeichnet, dass** die Innenwandung (6) der Filterkammer (3) mindestens ein in den Innenraum (7) der Filterkammer (3) hineinragendes Formelement (8) aufweist, wobei die Größe der durch das Formelement (8) bzw. die Formelemente (8) gebildeten Innenwandungsbereiche der Filterkammer (3) mindestens 10 Prozent, bevorzugt mindestens 25 Prozent, bis hin zu 100 Prozent der Größe der gesamten Innenwandung (6) der Filterkammer (3) beträgt.

7. System nach Anspruch 6, **dadurch gekennzeichnet, dass** die Größe der filterwirksamen Oberfläche des Filtermaterials (4) im Wesentlichen, insbesondere 90 Prozent bis 100 Prozent, der Größe der gesamten Innenwandung (6) der Filterkammer (3) einschließlich der Größe der durch das Formelement (8) bzw. die Formelemente (8) gebildeten Innenwandungsbereiche und abzüglich der Größe der in die Filterkammer (3) weisenden Oberfläche der Bodenplatte (10) des Filterelementes (5) beträgt.

8. System nach Anspruch 6 oder 7, **dadurch gekennzeichnet, dass** das Filterelement (5) zumindest teilweise von der Innenwandung (6) der Filterkammer (3) beabstandet ist, um einen Strömungsweg (11) für die von dem Filtermaterial (4) gefilterte Luft zu dem Gebläse (2) bereitzustellen.

9. System nach einem der Ansprüche 6 bis 8, **dadurch gekennzeichnet, dass** das Filtermaterial (4) ein im Wesentlichen biegeschlaffes Material, insbesondere ein Vlies und/oder ein Gewebe, aufweist.
